# EUROPEAN PATENT APPLICATION

(11) **EP 4 546 495 A1**
(43) Date of publication of application: **30.04.2025**
(21) Application number: 23860890.5
(22) Date of filing: 30.08.2023
(51) Int. Cl.: H01M 10/058, H01M 10/52, H01M 10/0565, H01M 10/052, H01M 4/02

(54) **METHOD FOR MANUFACTURING ELECTRODE LAMINATE**

(30) Priority: 30.08.2022 KR 20220109521
(71) Applicant: LG Energy Solution, Ltd., Seoul 07335 (KR)
(72) Inventor: HWANG, Sun Wook, Daejeon 34122 (KR); RYU, Ji Hoon, Daejeon 34122 (KR); KIM, Dong Kyu, Daejeon 34122 (KR)
(74) Representative: Hoffmann Eitle
(86) International application number: PCT/KR2023/012922
(87) International publication number: WO 2024/049214

(57) **Abstract**

A method for manufacturing an electrode laminate, according to the present invention, comprises the steps of: preparing an electrode; applying an electrolyte solution onto the electrode; arranging an oxygen blocking member on the applied electrolyte solution; and curing the electrolyte solution impregnated into the electrode and the electrolyte solution applied onto the surface of the electrode

## Description

### TECHNICAL FIELD

### Cross-reference to Related Application

This application claims the benefit of Korean Patent Application No. 10-2022-0109521, filed on August 30, 2022, in the Korean Intellectual Property Office, the disclosure of which is incorporated herein in its entirety by reference.

### Technical Field

The present invention relates to a method for manufacturing an electrode laminate.

### BACKGROUND ART

In recent years, there has been a dramatic increase in demand for batteries as energy sources with the technical development and increase in demand for Energy Storage System (ESS), and research on batteries capable of meeting various requirements has been conducted accordingly. In particular, research on a lithium secondary battery having a high energy density and also exhibiting excellent lifespan and cycle characteristics as a power source for such devices has been actively conducted.

Typically, lithium secondary batteries include a positive electrode, a negative electrode, a separator interposed between the positive electrode and the negative electrode, an electrolyte, and the like. As a typical electrolyte for the lithium secondary batteries, a liquid-state electrolyte in which lithium salts are dissolved in a non-aqueous organic solvent has been predominantly used. However, the use of such a liquid-state electrolyte causes a high chance of degrading electrode materials and volatilizing organic solvents, and also brings about concerns over combustion or explosion resulting from a rise in ambient temperature and temperature of the battery itself, and leakage, thereby leading to low safety.

Lately, research on various materials or types of solid electrolytes has been actively pursued to overcome the safety concern of liquid electrolytes. In particular, a gel electrolyte provides excellent stability and processability, and also has its own gel-phase adhesive strength to provide benefits such as excellent interfacial stability between an electrode and an electrolyte.

Meanwhile, the gel electrolyte may be produced by gelling (crosslinking) a composition in which a lithium salt, a solvent, a polymerizable monomer, and an initiator are mixed at an appropriate temperature in a reasonable amount of time. In this case, when the electrolyte is gelled in an oxygen environment, the gel electrolyte is not completely cured, and as a result, the gel electrolyte volatilizes or contacts other electrodes to be separated during a process of manufacturing cells. When the electrolyte is gelled in a space where an oxygen-free environment is set (e.g., a glove box) to prevent the above issues from taking place, large electrode laminates are hardly manufacturable due to the limitation in size of the space.

Accordingly, there is a need to develop technology for a method for manufacturing large-area electrode laminates by completely curing the gel electrolyte even in an oxygen environment.

### DISCLOSURE OF THE INVENTION

### TECHNICAL PROBLEM

An aspect of the present invention provides a method for completely curing a gel electrolyte even in an oxygen environment by blocking contact between the gel electrolyte and oxygen with the use of an oxygen blocking member.

### TECHNICAL SOLUTION

According to an aspect of the present invention, there is provided a method for manufacturing an electrode laminate, which includes preparing an electrode, applying an electrolyte solution onto the electrode, disposing an oxygen blocking member on the applied electrolyte solution, and curing the electrolyte solution impregnated inside the electrode and the electrolyte solution applied onto the electrode surface.

According to the method for manufacturing an electrode laminate, the electrolyte solution applied onto the electrode surface may be cured to form an electrolyte layer on the electrode.

The oxygen blocking member may include at least one selected from the group consisting of glass, polypropylene (PP), and high density polyethylene (HDPE).

The electrolyte solution may include a monomer in an amount of 5 wt% to 50 wt%, an initiator in an amount of 0.01 wt% to 1 wt%, and a lithium salt in an amount of 5 wt% to 30 wt%.

The monomer may include at least one selected from the group consisting of ethyleneglycol diacrylate, triethylene glycol diacrylate, ethoxylated trimethylolpropane triacrylate (ETPTA), bisphenol A ethoxylated dimethacrylate, acrylic acid, carboxyethyl acrylate, methyl cyanoacrylate, ethyl cyanoacrylate, ethyl cyano ethoxyacrylate, cyano acrylicacid, hydroxyethyl methacrylate, and hydroxypropyl acrylate.

The initiator may include at least one selected from the group consisting of 2-hydroxy-2-methylpropiophenone (HMPP), 1-hydroxy-cyclohexylphenyl-ketone, benzophenone, 2-hydroxy-1-[4-(2-hydroxyethoxy)phenyl]-2-methyl-1-propanone, oxy-phenylacetic acid 2-[2-oxo-2 phenyl-acetoxy-ethoxy]-ethyl ester, oxy-phenyl-acetic 2-[2-hydroxyethoxy]-ethyl ester, alpha-dimethoxy-alpha-phenylacetophenone, 2-benzyl-2-(dimethylamino)-1-[4-(4-morpholinyl)phenyl]-1-butanone, 2-methyl-1-[4-(methylthio)phenyl]-2-(4-morpholinyl)-1-propanone, diphenyl (2,4,6-trimethylbenzoyl)-phosphine oxide, bis(2,4,6-trimethyl benzoyl)-phenyl phosphine oxide, bis(eta 5-2,4-cyclopentadien-1-yl) bis[2,6-difluoro-3-(1H-pyrrol-1-yl)phenyl]titanium, 4-isobutylphenyl-4'-methylphenyliodonium hexafluorophosphate, and methyl benzoylformate.

According to the method for manufacturing an electrode laminate, the electrolyte solution may be photo-cured or heat-cured to form the electrolyte layer.

According to the method for manufacturing an electrode laminate, the electrolyte solution may have a solid content of 10% to 60%.

According to the method for manufacturing an electrode laminate, the electrolyte solution may have a viscosity of 30 cP or less at 25 °C.

According to the method for manufacturing an electrode laminate, the electrolyte layer may have a thickness of 10 µm to 200 µm.

According to the method for manufacturing an electrode laminate, the electrode may have a thickness of 100 µm or less.

### ADVANTAGEOUS EFFECTS

According to the present invention, an electrolyte solution is cured by blocking contact between the electrolyte solution and oxygen with the use of an oxygen blocking member, and thus a gel electrolyte may be completely cured even in an oxygen environment. Accordingly, the gel electrolyte may be prevented from volatilizing or contacting other electrodes to be separated during a process of manufacturing cells.

In addition, the electrolyte solution may be cured while impregnated to a sufficient depth in an electrode, and thus a reaction takes place uniformly throughout the electrode even when a separate liquid electrolyte solution is not injected into an electrode laminate in the manufacture of lithium secondary batteries, thereby improving capacity, output, and lifespan characteristics.

In addition, according to the present invention, the electrolyte is not required to be gelled in a space such as a glove box in which an oxygen-free environment is set, and thus manufacturing a large-area electrode laminate is achievable.

### BRIEF DESCRIPTION OF THE DRAWINGS

FIG. 1 is an image showing a surface of an electrode laminate manufactured in Example 1.
FIG. 2 is an image showing a surface of an electrode laminate manufactured in Example 2.
FIG. 3 is an image showing a surface of an electrode laminate manufactured in Comparative Example 1
FIG. 4 is a graph showing capacity (mAh) - voltage (V) upon charging of a lithium secondary battery manufactured in Example 1.
FIG. 5 is a graph showing capacity (mAh) - voltage (V) upon charging of a lithium secondary battery manufactured in Example 2.
FIG. 6 is a graph showing capacity (mAh) - voltage (V) upon charging of a lithium secondary battery manufactured in Comparative Example 1.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals denote like elements throughout specification.

Unless otherwise defined, all terms (including technical and scientific terms) used herein have the same meaning as commonly understood by one of ordinary skill in the art to which the present invention belongs. Terms as defined in a generally used dictionary are not construed ideally or excessively unless defined apparently and specifically.

Terms used herein are not for limiting the inventive concept but for describing the embodiments. As used herein, the singular forms include the plural forms as well, unless the context clearly indicates otherwise. The meaning of "comprises" and/or "comprising" used in the specification does not exclude the presence or addition of other components besides a mentioned component.

In this specification, when an element "includes" a component, it may indicate that the element does not exclude another component unless explicitly described to the contrary, but may further include another component.

In this specification, the description "A and/or B" refers to A or B, or A and B.

As used herein, "%" refers to wt% unless indicated otherwise.

As used herein, viscosity may be measured using a viscosity meter, specifically, using a Brookfield viscometer (DV-II + PRO Viscometer, Brookfield) as a viscosity meter, at 25 °C, a relative humidity (RH) of 50%, and a frequency of 30 Hz.

Hereinafter, the present invention will be described in more detail.

A method for manufacturing an electrode laminate includes preparing an electrode, applying an electrolyte solution onto the electrode, disposing an oxygen blocking member on the applied electrolyte solution, and curing the electrolyte solution impregnated inside the electrode and the electrolyte solution applied onto the electrode surface.

When the electrolyte is gelled in an oxygen environment, the gel electrolyte is not completely cured, and as a result, the gel electrolyte volatilizes or contacts other electrodes to be separated during a process of manufacturing cells. When the electrolyte is gelled in a contained space where an oxygen-free environment is set (e.g., a glove box) to prevent the above issues from taking place, it limits size in the space to hardly manufacture large electrode laminates.

The present inventors strived to overcome the issues above and found out that the gel electrolyte may be completely cured even in an oxygen environment by blocking the contact between the electrolyte solution and oxygen with the use of an oxygen blocking member, and have thus completed the present invention.

Hereinafter, the method for manufacturing an electrode laminate according to the present invention will be described in more detail stage by stage.

### <Method for manufacturing electrode laminate>

### (1) Preparing electrode

The method for manufacturing an electrode laminate according to the present invention begins with preparing an electrode for a lithium secondary battery. In this case, the electrode may be a positive electrode or a negative electrode.

The electrode includes a current collector and an electrode active material layer. In this case, the electrode active material layer may be formed on the current collector.

The current collector is not particularly limited as long as it has conductivity without causing chemical changes in batteries. For example, copper, stainless steel, aluminum, nickel, titanium, fired carbon, or aluminum or stainless steel that is surface-treated with one of carbon, nickel, titanium, silver, or the like may be used as the collector.

Moreover, the electrode active material layer may be a positive electrode active material layer including a positive electrode active material or a negative electrode active material layer including a negative electrode active material.

As the positive electrode active material, positive electrode active materials well known in the art may be used without limitation, and for example, lithium cobalt-based oxide, lithium nickel-based oxide, lithium manganese-based oxide, lithium iron phosphate, lithium nickel manganese cobalt-based oxide, or a combination thereof may be used. To be specific, as the positive electrode active material, LiCoO₂, LiNiO₂, LiMn₂O₄, LiCoPO₄, LiFePO₄, and LiNiₐMnₑCo_{c}O₂ (where, 0 < a, b, c < 1 is satisfied), and the like may be used, but the positive electrode active material is not limited thereto.

The negative electrode active material may be, for example, one kind or at least two kinds selected from the group consisting of natural graphite; artificial graphite; a carbonaceous material; a lithium-containing titanium composite oxide (LTO); metals (Me): Si, Sn, Li, Zn, Mg, Cd, Ce, Ni, or Fe; an alloy formed of the metals (Me); an oxide (MeOₓ) formed of the metals (Me); and a composite of the metals (Me) and carbon.

Meanwhile, the electrode active material layer may further include a conductive material and a binder, in addition to a positive electrode active material and a negative electrode active material.

The conductive material is a component for further improving the conductivity of the active material, and such conductive material is not particularly limited as long as it has conductivity without causing chemical changes in batteries, As the conductive material, for example, a conductive material, such as: graphite; carbon black such as acetylene black, Ketjen black, channel black, furnace black, lamp black, or thermal black; conductive fibers such as carbon fibers or metal fibers; metal powder such as carbon fluoride powder, aluminum powder, and nickel powder; conductive whiskers such as zinc oxide whiskers and potassium titanate whiskers; conductive metal oxide such as titanium oxide; or polyphenylene derivatives may be used. Specific examples of a commercially available conductive material may include acetylene black series such as products manufactured by Chevron Chemical, Denka black manufactured by Denka Singapore private limited, products manufactured by Gulf Oil, Ketjen black, EC series manufactured by Armak, Vulcan XC-72 manufactured by Cabot, and Super P manufactured by Timcal.

The binder is a component that assists in binding between the active material and the conductive agent, etc. and in binding with the current collector. Examples of such binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer, a sulfonated ethylene-propylene-diene monomer, a styrene-butadiene rubber, a fluorine rubber, and various copolymers thereof, or the like.

The electrode according to the present invention may have a thickness of 100 µm or less, specifically 20 µm to 100 µm, more specifically 50 µm to 100 µm. When the thickness of the electrode satisfies the above numerical range, an electrolyte solution which will be described later may be cured while impregnated to a sufficient depth in an electrode, and thus a reaction takes place uniformly throughout the electrode even when a separate liquid electrolyte solution is not injected into an electrode laminate in the manufacture of lithium secondary batteries, thereby improving capacity, output, and lifespan characteristics.

### (2) Applying electrolyte solution onto electrode

Then, applying an electrolyte solution onto an electrode will be described.

The electrolyte solution according to the present invention may include a monomer, an initiator, a lithium salt, and a solvent.

The monomer is a material that may form a gel electrolyte through a polymerization reaction.

For example, the monomer may be at least one selected from the group consisting of ethyleneglycol diacrylate, triethylene glycol diacrylate, ethoxylated trimethylolpropane triacrylate (ETPTA), bisphenol A ethoxylated dimethacrylate, acrylic acid, carboxyethyl acrylate, methyl cyanoacrylate, ethyl cyanoacrylate, ethyl cyano ethoxyacrylate, cyano acrylicacid, hydroxyethyl methacrylate, hydroxypropyl acrylate, a derivative thereof, or a combination thereof, but is not limited thereto.

The monomer may be included in an amount of 5 to 50 parts by weight, specifically 5 to 30 parts by weight, more specifically 5 to 20 parts by weight with respect to 100 parts by weight of the electrolyte solution. When the monomer is included in the amount range described above, a sufficient crosslinking reaction between monomers takes place, and accordingly, an electrolyte layer having a specific thickness range is manufacturable.

An initiator is a material for forming active radicals and thus causing a polymerization reaction of monomers. Specifically, the initiator may be decomposed by light such as UV at room temperature (5 °C to 30 °C), or decomposed by heat at 30 °C to 100 °C to form radicals, thereby initiating a free radical polymerization reaction of monomers.

The initiator may include at least one selected from the group consisting of a photo curing agent and a heat curing agent.

When the initiator is a photo curing agent, the initiator may include at least one selected from the group consisting of 2-hydroxy-2-methylpropiophenone (HMPP), 1-hydroxy-cyclohexylphenyl-ketone, benzophenone, 2-hydroxy-1-[4-(2-hydroxyethoxy)phenyl]-2-methyl-1-propanone, oxy-phenylacetic acid 2-[2-oxo-2 phenyl-acetoxy-ethoxy]-ethyl ester, oxy-phenyl-acetic 2-[2-hydroxyethoxy]-ethyl ester, alpha-dimethoxy-alpha-phenylacetophenone, 2-benzyl-2-(dimethylamino)-1-[4-(4-morpholinyl)phenyl]-1-butanone, 2-methyl-1-[4-(methylthio)phenyl]-2-(4-morpholinyl)-1-propanone, diphenyl (2,4,6-trimethylbenzoyl)-phosphine oxide, bis(2,4,6-trimethyl benzoyl)-phenyl phosphine oxide, bis(eta 5-2,4-cyclopentadien-1-yl) bis[2,6-difluoro-3-(1H-pyrrol-1-yl)phenyl]titanium, 4-isobutylphenyl-4'-methylphenyliodonium hexafluorophosphate, and methyl benzoylformate.

When the initiator is a heat curing agent, the initiator may include at least one selected from the group consisting of benzoyl peroxide, acetyl peroxide, dilauryl peroxide, di-tert-butyl peroxide, t-butyl peroxy-2-ethylhexanoate, cumyl hydroperoxide and hydrogen peroxide, 2,2'-azobis(2-cyanobutane), 2,2'-azobis(methylbutyronitrile), 2,2'-azobis(iso-butyronitrile) (AIBN), and 2,2'-azobisdimethyl-valeronitrile (AMVN).

The initiator may be included in an amount of 0.01 parts by weight to 1 part by weight, specifically 0.05 to 0.5 parts by weight, more specifically 0.06 to 0.1 parts by weight with respect to 100 parts by weight of the electrolyte solution. When the initiator is included in the amount range described above, an active cross-linking reaction between monomers may take place to form an electrolyte layer having a uniform thickness, and the polymerization rate may be controlled in the electrolyte solution, thereby preventing unreacted initiators from remaining and adversely affecting battery performance.

The lithium salt is used as a medium for transporting ions in lithium secondary batteries.

The lithium salt is a material that is readily soluble in the gel electrolyte, and may for example include a single substance or a mixture of two or more substances selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, lithium chloroborane, lower aliphatic carboxylic acid lithium, 4-phenyl boric acid lithium, and imide, but is not limited thereto.

The lithium salt may be included in an amount of 5 to 30 parts by weight, specifically 10 to 20 parts by weight, more specifically 10 to 15 parts by weight with respect to 100 parts by weight of the electrolyte solution. When the lithium salt is included in the amount range described above, the cured electrolyte solution may have sufficient ionic conductivity.

The solvent is for dissolving the monomer, the initiator, and the lithium salt described above.

The solvent is the one commonly used in secondary batteries, and for example, ether, ester (acetate, propionate), amide, linear carbonate or cyclic carbonate, nitrile (acetonitrile, SN, and the like) may be used alone or at least two therefrom may be mixed and used in combination.

In particular, typically, a carbonate-based solvent including a carbonate compound that is cyclic carbonate, linear carbonate, or a mixture thereof may be used.

Specific examples of the cyclic carbonate compound include a single compound or a mixture of at least two compounds selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and halogenates thereof. In addition, as specific examples of the linear carbonate compounds, a single compound or a mixture of at least two compounds selected from the group consisting of dimethyl carbonate (DMC), diethyl carbonate (DEC), dipropyl carbonate (DPC), ethylmethyl carbonate (EMC), methylpropyl carbonate (MPC), and ethylpropyl carbonate (EPC) may typically be used, but the embodiment of the present invention is not limited thereto.

In particular, among the carbonate-based solvents, propylene carbonate and ethylene carbonate, which are cyclic carbonates, are preferably used because they are high-viscosity organic solvents and have high permittivity, thereby satisfactorily dissociating a lithium salt in an electrolyte solution, and when such cyclic carbonates are mixed with a low-viscosity, low-permittivity linear carbonate, such as ethylmethyl carbonate, diethyl carbonate, or dimethyl carbonate, in an appropriate ratio and used, an electrolyte solution having high electrical conductivity may be prepared, and therefore, such mixtures are more preferably used.

In addition, as esters in the solvent, a single compound or a mixture of at least two selected from the group consisting of methyl acetate, ethyl acetate, propyl acetate, methyl propionate, ethyl propionate, γ-butyrolactone, γ-valerolactone, γ-caprolactone, α-valerolactone, and ε-caprolactone may be used, but the embodiment of the present invention is not limited thereto.

The electrolyte solution may have a solid content of 10% to 60%, specifically 15% to 50%, more specifically 15% to 35%. When the solid content of the electrolyte solution satisfies the above numerical range, the electrolyte solution may have a viscosity that may be applicable on the electrode active material layer. In addition, the solvent is readily removed when the electrolyte solution is cured, and accordingly, side reactions due to residual solvents or degradation in mechanical strength of the electrolyte layer may be prevented.

At 25 °C, the electrolyte solution may have a viscosity of 30 cP or less, specifically 5 cP to 30 cP, more specifically 10 cP to 20 cP. When the viscosity of the electrolyte solution satisfies the above numerical range, the electrolyte solution may be cured while impregnated to a sufficient depth in an electrode, and thus a reaction takes place uniformly throughout the electrode even when a separate liquid electrolyte solution is not injected into an electrode laminate in the manufacture of lithium secondary batteries, thereby improving capacity, output, and lifespan characteristics.

As the electrolyte solution coating method, typical coating methods may be used. For example, bar coating, spin coating, roll coating, slot die coating, hand coating, spray coating, and the like may be used, and one method or a combination of two or more methods therefrom may be used.

### (3) Disposing oxygen blocking member on applied electrolyte solution

Then, an oxygen blocking member is disposed on the electrolyte solution applied onto the electrode. The electrolyte solution may be covered with the oxygen blocking member, thus contact between the electrolyte solution and oxygen may be blocked.

The oxygen blocking member may be insoluble in a solvent in order to effectively block the contact between the electrolyte solution and oxygen. Specifically, the oxygen blocking member may be insoluble in an organic solvent.

For example, the oxygen blocking member may include at least one selected from the group consisting of glass, polypropylene (PP), and high density polyethylene (HDPE), but is not limited thereto.

The oxygen blocking member may have a thickness of 100 µm to 2000 µm, specifically 100 µm to 500 µm, more specifically 100 µm to 200 µm. When the thickness of the oxygen blocking member satisfies the numerical range described above, contact between the electrolyte solution and oxygen is blocked, and accordingly, the electrolyte solution may completely be cured.

### (4) Curing electrolyte solution impregnated inside electrode and electrolyte solution applied onto electrode surface

Then, the electrolyte solution impregnated inside the electrode and the electrolyte solution applied onto the electrode surface are cured. In this case, the curing of the electrolyte solution applied onto the electrode surface may form an electrolyte layer on the electrode.

The curing of the electrolyte solution may be photo curing or heat curing. Specifically, the curing of the electrolyte solution may involve crosslinking monomers contained in the electrolyte solution by emitting ultraviolet (UV) rays or applying heat to the electrolyte solution covered with the oxygen blocking member. The electrolyte solution is cured while the contact between the electrolyte solution and oxygen is blocked by the oxygen blocking member, and accordingly, the electrolyte solution may be prevented from volatilizing or the electrolyte layer may be prevented from contacting other electrodes to be separated.

The electrolyte layer of the present invention may include a polymer matrix formed by crosslinking a monomer and an initiator, and a lithium salt impregnated into the polymer matrix. In this case, the electrolyte layer contains the lithium salt and may thus have ionic conductivity.

The degree of curing of the electrolyte layer may be 93% to 100%, specifically 95% to 100%, more specifically 98% to 100%. When the degree of curing of the electrolyte layer satisfies the above range, the electrolyte layer may be formed to have a uniform thickness on the active material layer, and the issue of the electrolyte layer being separated from the active material layer may be prevented.

The electrolyte layer may have a thickness of 10 µm to 200 µm, specifically 10 µm to 150 µm, more specifically 20 µm to 80 µm. When the thickness of the electrolyte layer satisfies the numerical range described above, the electrolyte layer may be prevented from being separated from the active material layer, positive ions (Li+), which are ion carriers, may easily pass through, and performance degradation depending on the total volume of the lithium secondary battery may be minimized.

After completing the curing of the electrolyte solution, the oxygen blocking member disposed on the electrolyte layer may be removed.

### <Method for manufacturing lithium secondary battery>

Hereinafter, A method for manufacturing a lithium secondary battery according to the present invention will be described.

The lithium secondary battery according to the present invention includes an electrode assembly.

According to an embodiment of the present invention, the electrode assembly may be manufactured by arranging an electrode laminate on which an electrolyte layer is formed and an electrode on which an electrolyte layer is not formed to contact each other. In this case, the electrode laminate is as described above.

For example, the electrode assembly of the present invention may be manufactured by arranging an electrode laminate including a negative electrode and an electrolyte layer formed on the negative electrode, and a positive electrode on which an electrolyte layer is not formed to contact each other. Alternatively, the electrode assembly of the present invention may include an electrode laminate including a positive electrode and an electrolyte layer formed on the positive electrode, and a negative electrode on which an electrolyte layer is not formed. In this case, the electrolyte layer may be disposed between the positive electrode and the negative electrode.

According to another embodiment of the present invention, in the electrode assembly, a plurality of the electrode laminates described above may be manufactured by arranging the electrolyte layers to contact each other. The forming of the electrode assembly in this way may improve electrical insulation, and accordingly, stable charging and discharging of batteries may be performed.

The lithium secondary battery of the present invention may not include a separator, which is disposed between the positive electrode and the negative electrode in typical lithium secondary batteries. Specifically, the electrolyte layer included in the electrode laminate of the present invention may be disposed between the positive electrode and the negative electrode, and may thus serve as a typical separator.

In addition, the lithium secondary battery of the present invention may not contain a liquid electrolyte solution injected when manufacturing typical lithium secondary batteries. Specifically, the electrolyte solution according to the present invention described above may be cured while impregnated to a sufficient depth in the electrode, and may thus serve as a typical liquid electrolyte solution.

The lithium secondary battery of the present invention may be manufactured by placing the electrode assembly described above in a cylindrical battery case or a square battery case and sealing the case. The battery case may be the one commonly used in the art, and there is no limit to the external shape according to the purpose of batteries, for example, it may be a cylindrical shape, a square shape, a pouch shape, or a coin shape, but is not limited to thereto.

The lithium secondary battery according to an embodiment of the present invention may be used in a battery cell which is used as a power source for a small-sized device, and may also be preferably used as a unit cell for a medium- and large-sized battery module including a plurality of battery cells. Preferred examples of the medium-to-large devices include electric vehicles, hybrid electric vehicles, plug-in hybrid electric vehicles, and energy storage systems (ESS).

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

### Examples and Comparative Examples

### Example 1

### (1) Preparation of electrode laminate

A 10 µm thick copper (Cu) metal thin film was prepared as a negative electrode current collector, and a 70 µm thick negative electrode active material layer containing artificial graphite as a negative electrode active material was prepared on one side of the copper metal thin film, thereby preparing a negative electrode having a total thickness of 80 µm.

A monomer, an initiator, and a lithium salt were dissolved at a weight ratio of 3.98:0.04:5.98 in a solvent in which ethylene carbonate (EC) and propylene carbonate (PC) were at a volume ratio of 5:5 to prepare an electrolyte solution. In this case, the electrolyte solution had a solid content of 25% and a viscosity of 15 cP at 25 °C.

The prepared electrolyte solution was applied onto an active material layer, and the applied electrolyte solution was covered with a polypropylene film. Then, the polypropylene film was irradiated with ultraviolet rays having a wavelength of 556 nm for 1 minute to cure the electrolyte solution. After completing the curing of the electrolyte solution, the polypropylene film was removed, and an electrode laminate in which an electrolyte layer was formed on the electrode active material layer was finally prepared. In this case, the electrolyte layer had a thickness of 40 µm.

### (2) Manufacturing of lithium secondary battery

A 60 µm positive electrode containing Li(Ni_{0.8}Mn_{0.1}Co_{0.1})0₂ as a positive electrode active material was prepared.

The electrolyte layer of the prepared electrode laminate was subjected to contacting the positive electrode to prepare an electrode assembly

The electrode assembly was stored in a battery case and sealed to manufacture a lithium secondary battery

### Example 2

An electrode laminate was manufactured in the same manner as in Example 1, except that a glass plate was used instead of a polypropylene film. In this case, the electrolyte layer had a thickness of 30 µm.

A lithium secondary battery was manufactured in the same manner as in Example 1, except that the electrode laminate above was used.

### Comparative Example 1

An electrode laminate was manufactured in the same manner as in Example 1, except that an electrolyte solution was cured without covering a polypropylene film. In this case, the electrolyte layer had a thickness of 10 µm.

A lithium secondary battery was manufactured in the same manner as in Example 1, except that the electrode laminate above was used.

### Experimental Example 1 - Evaluation of coating properties of electrolyte layer

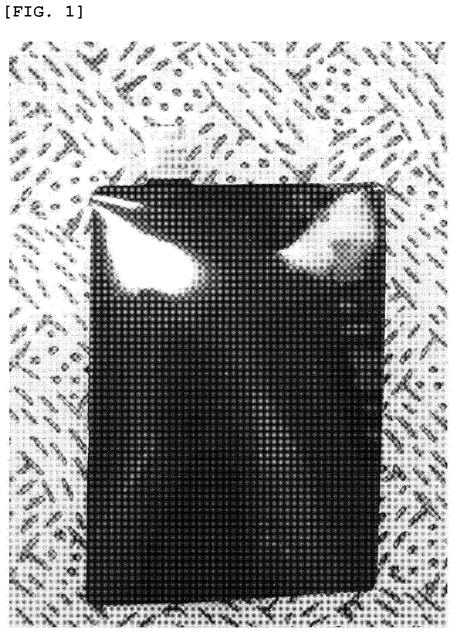

Surfaces of the electrode laminates prepared in Examples 1 and 2 and Comparative Example 1 were taken as images and shown in FIGS. 1 to 3.

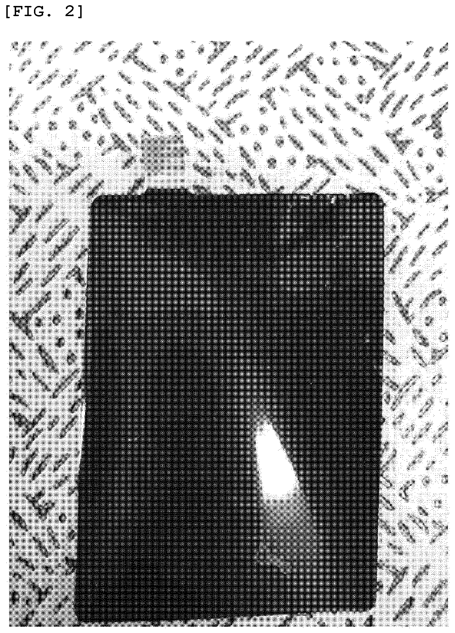

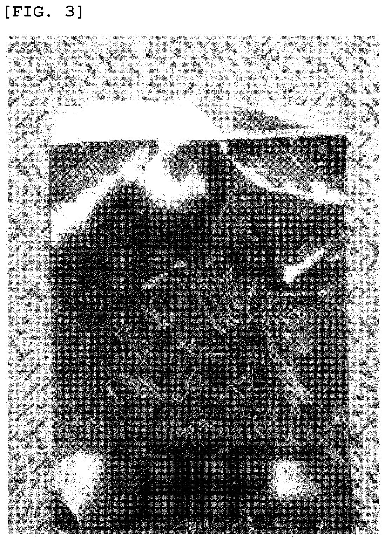

Specifically, FIG. 1 is an image showing a surface of the electrode laminate manufactured in Example 1, FIG. 2 is an image showing a surface of the electrode laminate manufactured in Example 2, and FIG. 3 is an image showing a surface of the electrode laminate manufactured in Comparative Example 1.

In addition, the surfaces of the electrode laminates were observed with the naked eye to determine whether electrolyte layers were separated or lifted from active material layers, as shown in Table 1 below.
X: No separation or lifting
O: Separation or lifting observed

**[Table 1]**

| | Presence/absence of separation or lifting of electrolyte layer |
|---|---|
| Example 1 | X |
| Example 2 | X |
| Comparative Example 1 | O |

As shown in Table 1 and FIGS. 1 to 3, in Comparative Example 1 in which an oxygen blocking member was not used when during electrolyte curing, unlike Examples 1 and 2 in which an oxygen blocking member was used during electrolyte curing, it was observed that the electrolyte layer included in the electrode laminate was separated or lifted from the active material layer.

### Experimental Example 2 - Evaluation on operation of lithium secondary battery

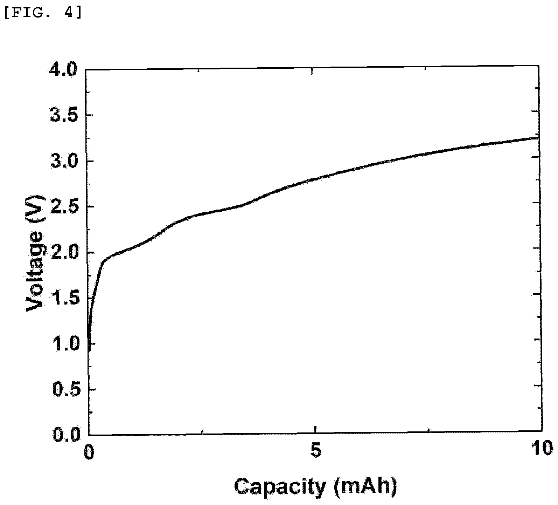

To evaluate whether the lithium secondary batteries manufactured in Examples 1 and 2 and Comparative Example 1 were operable, a graph of capacity (mAh)-voltage (V) was measured upon battery charging using Biologic SP-300. The measurement results are shown in each of FIGS. 4 to 6 below.

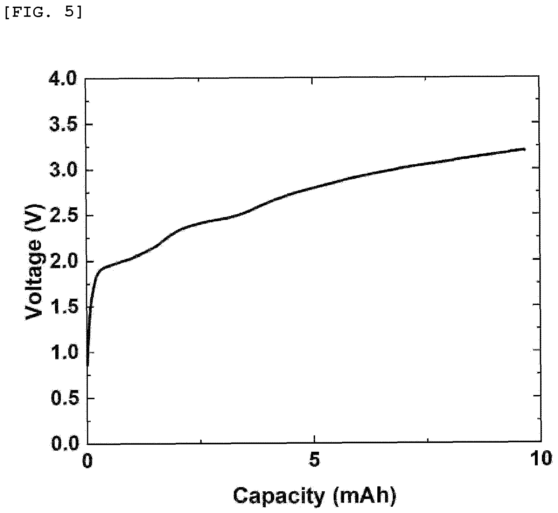

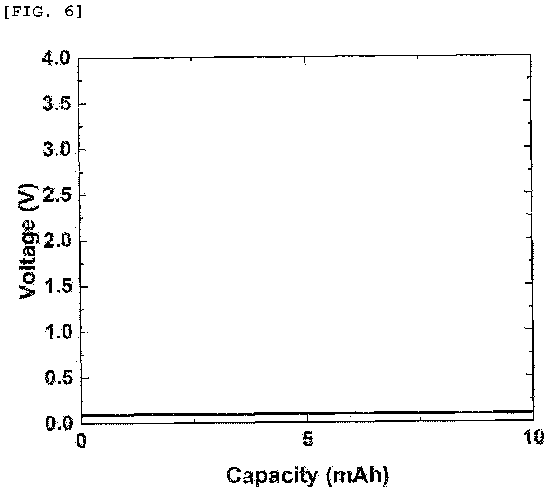

FIG. 4 is a graph of capacity (mAh) - voltage (V) upon charging of the lithium secondary battery manufactured in Example 1, FIG. 5 is a graph of capacity (mAh) - voltage (V) during charging of the lithium secondary battery manufactured in Example 2, and FIG. 6 is a graph of capacity (mAh) - voltage (V) during charging of the lithium secondary battery manufactured in Comparative Example 1.

As shown in FIGS. 4 to 6, in the Comparative Example 1 in which an oxygen blocking member was not used during electrolyte curing, it was observed that an increase in voltage value of the battery did not come along with an increase in capacity of the battery during charging. This indicates that in Comparative Example 1, the electrolyte layer serving as a separator was separated from the active material layer and thus the lithium secondary battery was not charged.

On the other hand, in Examples 1 and 2 in which an oxygen blocking member was used during electrolyte curing, it was observed that an increase in voltage value of the battery came along with an increase in capacity of the battery during charging. This indicates that in Examples 1 and 2, the electrolyte layer serving as a separator was not separated from the active material layer, and thus the battery was charged normally.

## Claims

1. A method for manufacturing an electrode laminate, the method comprising:
preparing an electrode;
applying an electrolyte solution onto the electrode;
disposing an oxygen blocking member on the applied electrolyte solution; and
curing the electrolyte solution impregnated inside the electrode and the electrolyte solution applied onto the electrode surface.

2. The method of claim 1, wherein the electrolyte solution applied onto the electrode surface is cured to form an electrolyte layer on the electrode.

3. The method of claim 1, wherein the oxygen blocking member comprises at least one selected from the group consisting of glass, polypropylene (PP), and high density polyethylene (HDPE).

4. The method of claim 1, wherein the electrolyte solution comprises a monomer in an amount ranging from 5 wt% to 50 wt%, an initiator in an amount ranging from 0.01 wt% to 1 wt%, and a lithium salt in an amount ranging from 5 wt% to 30 wt%.

5. The method of claim 4, wherein the monomer comprises at least one selected from the group consisting of ethylene glycol diacrylate, triethylene glycol diacrylate, ethoxylated trimethylolpropane triacrylate (ETPTA), bisphenol A ethoxylated dimethacrylate, acrylic acid, carboxyethyl acrylate, methyl cyanoacrylate, ethyl cyanoacrylate, ethyl cyano ethoxyacrylate, cyano acrylicacid, hydroxyethyl methacrylate, and hydroxypropyl acrylate.

6. The method of claim 4, wherein the initiator comprises at least one selected from the group consisting of 2-hydroxy-2-methylpropiophenone (HMPP), 1-hydroxy-cyclohexylphenyl-ketone, benzophenone, 2-hydroxy-1-[4-(2-hydroxyethoxy)phenyl]-2-methyl-1-propanone, oxy-phenylacetic acid 2-[2-oxo-2-phenyl-acetoxy-ethoxy]-ethyl ester, oxy-phenyl-acetic 2-[2-hydroxyethoxy]-ethyl ester, alpha-dimethoxy-alpha-phenylacetophenone, 2-benzyl-2-(dimethylamino)-1-[4-(4-morpholinyl)phenyl]-1-butanone, 2-methyl-1-[4-(methylthio)phenyl]-2-(4-morpholinyl)-1-propanone, diphenyl (2,4,6-trimethylbenzoyl)-phosphine oxide, bis(2,4,6-trimethyl benzoyl)-phenyl phosphine oxide, bis(eta 5-2,4-cyclopentadien-1-yl) bis[2,6-difluoro-3-(1H-pyrrol-1-yl)phenyl]titanium, 4-isobutylphenyl-4'-methylphenyliodonium hexafluorophosphate, and methyl benzoylformate.

7. The method of claim 1, wherein the electrolyte solution is photo-cured or heat-cured to form the electrolyte layer.

8. The method of claim 1, wherein the electrolyte solution has a solid content ranging from 10% to 60%.

9. The method of claim 1, wherein the electrolyte solution has a viscosity of 30 cP or less at 25 °C.

10. The method of claim 1, wherein the electrolyte layer has a thickness ranging from 10 µm to 200 µm.

11. The method of claim 1, wherein the electrode has a thickness of 100 µm or less.
